**Europäisches Patentamt**

**European Patent Office**

**Office européen des brevets**

(19)

(11) Publication number: **0 194 551**

**A2**

(12)

# EUROPEAN PATENT APPLICATION

(21) Application number: **86102797.7**

(22) Date of filing: **04.03.86**

(51) Int. Cl.⁴: **B62K 19/38**

(30) Priority: **04.03.85 JP 30727/85 U**

(43) Date of publication of application:
**17.09.86 Bulletin 86/38**

(84) Designated Contracting States:
**BE DE GB NL SE**

(71) Applicant: **MAEDA INDUSTRIES, LTD.**
**No. 1-16, 2-cho, Minami-koyo-cho**
**Sakai Osaka(JP)**

(72) Inventor: **Ozaki, Nobuo**
**No. 325, Higashi 3-cho Hamadera-suwanomori-cho**
**Sakai Osaka(JP)**

(74) Representative: **Reinhard, Skuhra, Weise**
**Leopoldstrasse 51**
**D-8000 München 40(DE)**

(54) **Structure for mounting a brake drum to a bicycle wheel hub.**

(57) A structure for mounting a brake drum to a bicycle wheel hub, comprising the brake drum (16) having an inner cylindrical boss portion (21) fittable on a cylindrical end portion - (11a) of the hub (11), the cylindrical end portion having an externally threaded outermost section (19) and a non-threaded section (11b) located adjacent to the threaded outermost section, the non-threaded section having a plurality of spaced spline grooves (18) formed in its external wall so as to extend axially of the hub to terminate in the threaded outermost section, the inner cylindrical boss portion having a plurality of spaced internal projections (22) formed therewith so as to extend axially of the hub for engagement with the spline grooves, and a lock nut (23) removably screwed on the threaded outermost section (19).

FIG. 1

EP 0 194 551 A2

## STRUCTURE FOR MOUNTING A BRAKE DRUM TO A BICYCLE WHEEL HUB

This invention relates to a bicycle hub brake assembly including a brake drum and a brake band, and more particularly to an improved structure for mounting the brake drum to a bicycle wheel hub.

The bicycle hub brake assembly generally has a brake band which, when actuated, comes into braking contact with a cylindrical wall of a brake drum co-rotatably mounted on a cylindrical end portion of a bicycle wheel hub. The conventional structure for mounting the brake drum to the hub is disclosed in Page 376 of "JAPANESE INDUSTRIAL STANDARD, Classification and Symbols of Bicycle, 1975" edited in English by Japanese Industrial Standard Association.

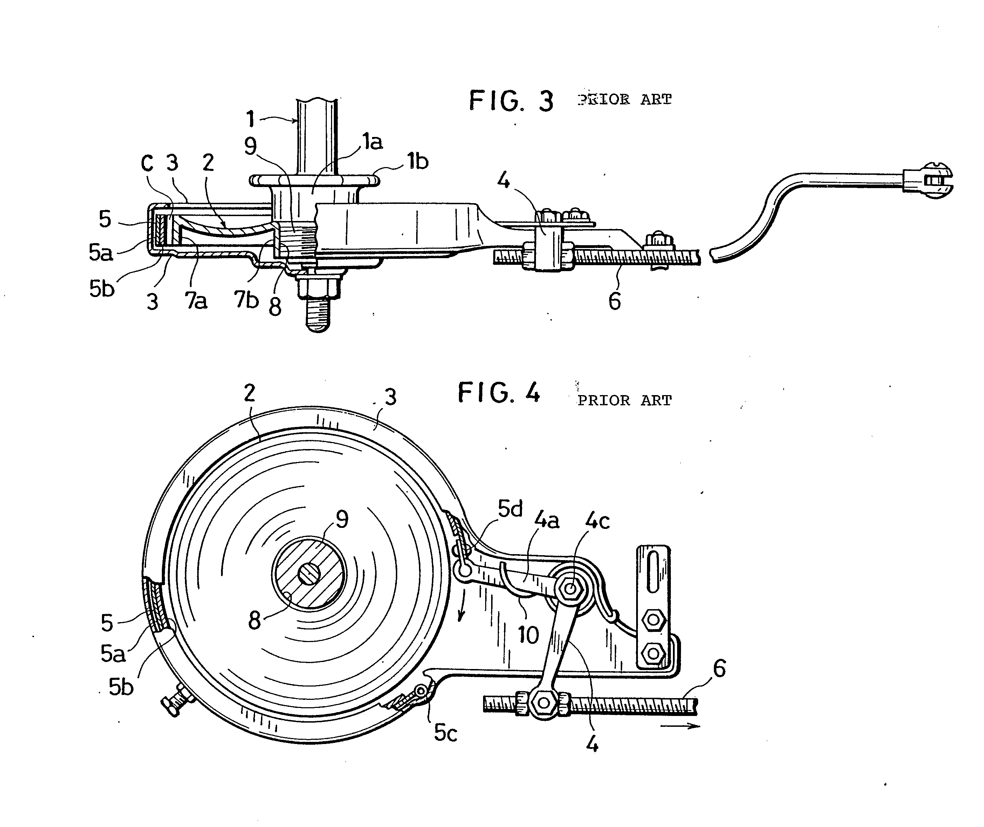

The conventional bicycle hub brake assembly as disclosed in the above-mentioned prior art reference is illustrated in Figures 3 and 4 of the accompanying drawings for better comprehension of the overall structure and arrangement of the component elements of this type of bicycle brake assembly in general and also for the convenience of clarifying disadvantages inherent to the conventional brake drum mounting structure as disclosed in the prior art reference.

Referring now to Figures 3 and 4, the bicycle hub brake assembly comprises a brake drum 2 fixed on an enlarged cylindrical end portion 1a of a bicycle wheel hub 1. The drum 2 has an outer cylindrical portion 7a and an inner cylindrical boss portion 7b which is internally threaded at 8 for screwing engagement with an externally threaded section 9 on the hub end portion 1a. An axially inner extremity of the hub end portion 1a is formed with an integral spoke mounting flange 1b.

The brake drum 1 is surrounded by a flexible brake band 5 which usually consists of an outer metal layer 5a and an inner lining layer 5b. Both of the brake drum 2 and the brake band 5 are housed within a hollow casing or cover 3.

The brake band 5 is connected at its one end 5a to the cover 3, and at its the other end 5d to a free end of one arm 4a of a bell crank 4 which is pivotally mounted at its center on a support shaft 4c. The other arm 4b of the bell crank 4 is pivotally connected at its free end to a reciprocatingly movable control rod 6 which is connected to a known remote brake lever (not shown). The arm 4a, and hence the bell crank 4, is always urged clockwise in Figure 4 by a return spring 10 so as to normally keep the brake band 5 away from the circumferential wall of the outer cylindrical portion 7a of the drum 4. A narrow clearance C exists between the lining layer 5b of the brake band 5 and the circumferential wall of the outer cylindrical portion 7a of the drum 7 when the brake lever is in its inactive position.

In operation, when the remote brake lever is operated to pull the control rod 6 in the direction of an arrow P in Figure 4, the bell crank 4 is moved about the support shaft 4c counterclockwise against the urging force of the spring 10, with the result that the movable end 5d of the brake band 5 is pulled in the direction of an arrow Q in Figure 4 so that the band 5 is forced into frictional contact with the circumferential wall of the outer cylindrical portion 7a of the brake drum 2. When the drum 2, together with the hub 1, is in its forward rotation as indicated by the arrow Q, such frictional contact is promoted so that the band 5 is tightly wound onto the circumferential wall of the drum 2 to cause tight engagement of the brake band 5 with the drum 2.

Thus, it is possible to say that this type of bicycle brake assembly is self-encouraging in braking performance, in addition to that the braking contact area between the band 5 and the drum 2 is large enough to impart an effective braking force to the wheel hub 1. Therefore, as far as the braking ability is concerned, the hub brake assembly is superior to a known caliper type bicycle brake assembly which is quite limited in braking contact area between a pair of small brake shoes and a bicycle wheel rim.

Despite the above advantage in braking performance, the hub brake assembly is in fact used predominantly for relatively low price bicycles (including the so-called mini bicycles) but quite rarely for high class or sport type bicycles. This is considered attributable to the following reason.

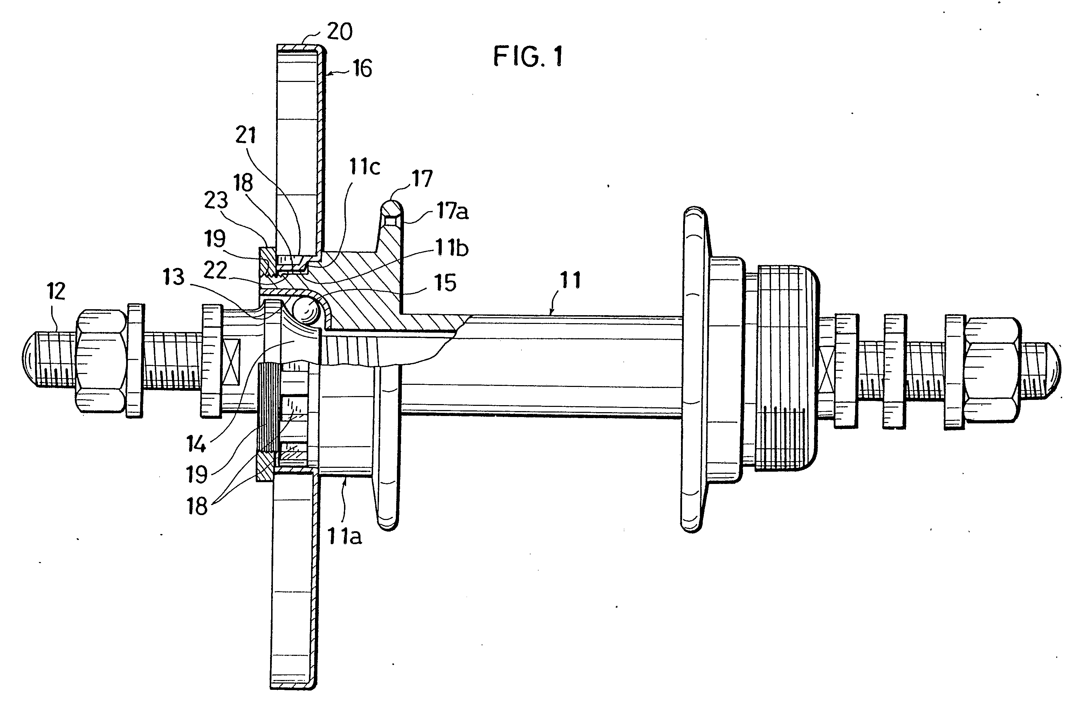

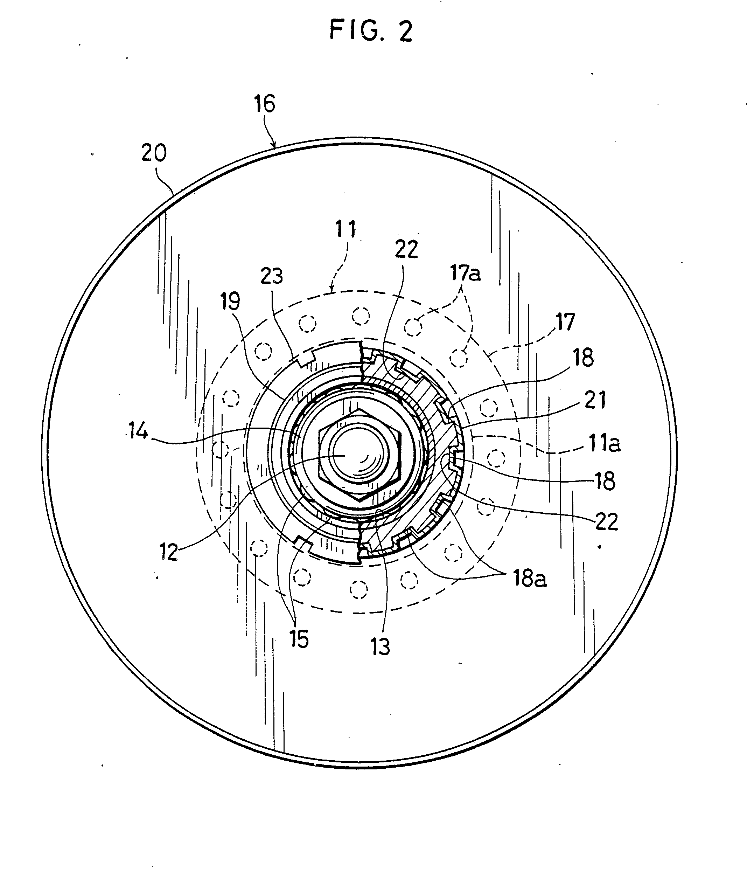

As apparent from Figure 3, the internal threads 8 on the drum boss portion 7b as well as the external threads 9 on the hub end portion 1a are right-handed so that each formed rotational force or torque applied to the drum 2 brings the internally threaded section 8 into more tightened engagement with the externally threaded section 9. Thus, repeated braking operations results in that the drum boss portion 7b is irreversibly tightened up onto the hub end portion 1a, making it no longer possible to remove the drum 2 from the hub 1. Such incapability or extreme difficulty of the brake drum removal gives rise to a problem in replacing a broken or damaged spoke or spokes. More particularly, although the spoke replacement requires insertion of a new spoke through a corresponding one of a plurality of spoke mounting holes (not shown in Figures 1 and 2 but shown in Figures 1 and 2) formed in the hub flange 1b, such spoke insertion is inevitably hindered by the non-removable brake drum 2 because the drum 2 is larger in diameter than the hub flange 1b.

Another disadvantage in the prior art brake drum mounting structure is that the self-encouraging engagement between the drum internal threads 8 and the hub external threads 9 caused by the torque imparted to the drum 2 develops a great internal stress in the drum boss portion 7b, which necessitates undesirable increase in wall thickness of the drum boss portion 7b to such an extent that at least the portion 7b is able to withstand the aforesaid internal stress. Naturally, an increase in the wall thickness of the drum 2 leads to a weight increase of the bicycle, which is undesirable because every structural parts of a bicycle should be as light as possible to reduce a total weight of the bicycle to a possible extent.

It is, therefore, an object of the present invention to provide an improved structure for mounting a brake drum to a bicycle wheel hub which enables ready removal of the brake drum from the wheel hub for replacement of a spoke or spokes.

Another object of the invention is to provide an improved structure for mounting a brake drum to a bicycle wheel hub which is free from development of impermissible internal stress in the boss portion of the brake drum.

According to the present invention, there is provided a structure for mounting a brake drum to a bicycle wheel hub, comprising the brake drum having an inner cylindrical boss portion fittable on a cylindrical end portion of the hub, the cylindrical end portion having an externally threaded outermost section and a non-threaded section located adjacent to the threaded outermost section, the non-threaded section having a plurality of spaced spline grooves formed in its external wall so as to extend axially of the hub to terminate in the threaded outermost section, the inner cylindrical boss portion having a plurality of spaced internal projections formed therewith so as to extend axially of the hub for engagement with the spline grooves, and a lock nut removably screwed on the threaded outermost section.

The invention will now be described further, by way of example, with reference to the accompanying drawings, in which:

Figure 1 is a front elevation, with parts broken away, of a brake drum mounting structure according to the invention;

Figure 2 is a left side elevation, with parts broken away, of the structure shown in Figure 1;

Figure 3 is a bottom plan view, with parts broken away, showing the general overall structure and arrangement of component elements of a bicycle hub brake assembly and also the prior art structure for mounting a brake drum to a bicycle wheel hub; and

Figure 4 is a side elevational view of the hub brake assembly, with parts broken away and taken along the line IV-IV in Figure 4.

Referring now to Figures 1 and 2, a bicycle wheel hub 11 is rotatably mounted on a stationary hub spindle 12 which is fixed at its opposite ends to a pair of spaced end plates (not shown) of a bicycle frame in a manner known per se. The hub 11 is supported rotatably on the spindle 12 by means of ball bearings. Each ball bearing includes a cup-shaped outer race member 13 rigid to an internal surface of the hub, a hub cone 14 screwed on the spindle 12 to provide a conical inner race, and steel balls 15 interposed between the races 13 and 14. One end of the hub 11 is formed with an enlarged cylindrical portion 11a and an integral flange 17 in which a number of regularly spaced spoke mounting holes 17a are formed conventionally.

A brake drum 16 according to the present invention is mounted on the cylindrical hub end portion 11a in a manner quite different from the conventional manner as already described in the foregoing. For this purpose, the hub end portion 11a is formed with a diametrically reduced cylindrical end section 11b. A plurality of spline grooves 18, preferably regularly spaced, are formed in the wall thickness of the section 11b. The spline grooves 18 extend in parallel with an axis of the hub 11. The spline grooves 18 start from an annular vertical wall 11c defining the reduced section 11b and terminate in an externally threaded outermost section 19 whose external cylindrical surface wall is substantially flush with bottom walls 18a of the spline grooves 18 so that the drum 16 can be coupled onto the hub end portion 11a through this section 19. Alternatively, this section 19 may have a smaller diameter than the non-threaded section 11b for the same purpose.

On the other hand, the brake drum 16, which may be press-formed from a single flat plate, comprises an outer cylindrical portion 20 and an inner cylindrical boss portion 21 which is substantially corrugated to provide a plurality of axially extending projections 22 for intimate engagement with the spline grooves 18.

In assembly, the inner boss portion 21 of the drum 16 is axially coupled onto the end portion 11a of the hub 11 to bring the axial projections 22 into engagement with the spline grooves 18. Subsequently, a lock nut 23 is screwed on the threaded section 19 of the end portion 11a and tightened up enough to prevent the axial displacement of the drum 16 relative to the hub 11.

In operation, the rotation of the brake drum 16 relative to the hub 11 is inhibited by the spline-coupling engagement of the boss projections 22 with the hub spline grooves 18. Thus, a braking force or torque acting on the drum 16 is transmitted effectively through the spline-coupling engagement between the projections 22 and the spline grooves 18 and such torque transmission does not leads to any development of impermissible internal stress in the drum 16 and the hub 11.

The lock nut 23 in no way takes part in the torque transmission from the brake drum 16 to the hub 11 but merely serves the sole purpose of preventing unexpected detachment, from the hub 11, of the drum 16 which is otherwise movable axially relative to the hub 16. Thus, repeated braking operations accompanied by great torque development will not result in excessive or irreversible tightening of the lock nut 23, which enables the nut 23 to be readily removed for subsequent removal of the brake drum 16 when such is desired for example for spoke replacement.

The brake drum mounting structure has been described hereinbefore with reference to Figures 1 to 4 illustrating an external type hub brake assembly having the brake band arranged externally of the brake drum. However, the same mounting structure is also applicable to a known expanding type hub brake assembly having a brake band arranged internally of the brake drum.

The invention being thus described, it will be obvious that the same may be varied in many ways. For example, the inner cylindrical boss portion 21 of the brake drum 16 may be provided internally with a plurality of axially extending spline grooves into which are fitted a plurality of axially extending projections formed on the outer periphery of the hub end portion 11a. Further, the spline grooves 18 and the engaging projections 22 may be slightly spiral with respect to the axis of the hub 11, so that a braking force exerted on the brake drum 16 can produce a force component tending to urge the drum 16 axially inwardly to prevent unexpected loosing of the lock nut 23. Such variations are not to be regarded as a departure from the spirit and scope of the invention, and all such modifications as would be obvious to those skilled in the art are intended to be included within the scope of the invention.

**Claims**

1. A structure for mounting a brake drum to a bicycle wheel a hub, comprising the brake drum (16) having an inner cylindrical boss portion (21) fittable on a cylindrical end portion (11a) of the hub (11), characterized in that said cylindrical end portion (11a) has an externally threaded outermost section (19) and a non-threaded section (11b) located adjacent to said threaded outermost section, said non-threaded section having a plurality of spaced spline grooves (18) formed in an external wall of said non-threaded section, said spline grooves extending axially of said hub to terminate in said threaded section, said inner cylindrical boss portion having a plurality of spaced axially extending internal projections (22) formed therewith for engagement with said spline grooves, and a lock nut (23) is removably screwed on said threaded outermost section.

2. The mounting structure according to claim 1, wherein said threaded outermost section (10) is substantially flush with said non-threaded section (11b).

3. The mounting structure according to claim 1, wherein said threaded outermost section (10) is smaller in diameter than said non-threaded section (11b).

4. The mounting structure according to claim 1, wherein said plurality of spline grooves (18) are formed in an internal wall of said cylindrical boss portion (21), and said projections (22) are formed on said external wall of said non-threaded section (11b).

FIG. 1

0 194 551

# FIG. 2

FIG. 3    PRIOR ART

FIG. 4    PRIOR ART